# EUROPÄISCHE PATENTSCHRIFT

(11) **EP 3 433 440 B1**
(45) Veröffentlichungstag und Bekanntmachung des Hinweises auf die Patenterteilung: **25.06.2025**
(21) Anmeldenummer: 17713208.1
(22) Anmeldetag: 20.03.2017
(51) Int. Cl.: E04B 1/26, F16B 25/00

(54) **VERFAHREN ZUM VERBINDEN VON BALKEN AUS HOLZWERKSTOFF**
METHOD FOR JOINING WOODEN BEAMS
PROCÉDÉ D'ASSEMBLAGE DE POUTRES EN BOIS

(30) Priorität: 24.03.2016 DE 102016204921
(43) Veröffentlichungstag der Anmeldung: 30.01.2019
(73) Patentinhaber: SWG Schraubenwerk Gaisbach GmbH, 74638 Waldenburg (DE)
(72) Erfinder: ERNST, Henning, 76761 Rülzheim (DE)
(74) Vertreter: Patentanwälte Ruff, Wilhelm, Beier, Dauster & Partner mbB
(86) Internationale Anmeldenummer: PCT/EP2017/056563
(87) Internationale Veröffentlichungsnummer: WO 2017/162590

(56) Entgegenhaltungen:
- EP-A1- 2 639 463
- CH-A5- 680 674
- DE-C- 862 659
- DE-U1- 29 621 923

## Beschreibung

Die Erfindung betrifft ein Verfahren zum Verbinden von Balken aus Vollholz oder Leimholz.

Bekannte Verbinder für Balken aus Vollholz oder Leimholz, die für sowohl auf Druck als auch auf Zug belastete Verbindungen eingesetzt werden können, bestehen aus Metallplatten, die in vorgefertigte Schlitze in einem Balken oder mehreren Balken eingesetzt werden. Die Metallplatten weisen Durchgangsöffnungen auf. Nach dem Einsetzen der Stahlplatten werden diese mit Stabdübeln, die üblicherweise ebenfalls aus Stahl bestehen, in den Balken gesichert. Hierzu müssen die Balken angebohrt werden, wobei die Schwierigkeit darin besteht, die Durchgangsöffnungen in den Stahlplatten genau zu treffen.

Aus der deutschen Patentschrift DE 197 24 285 C2 ist ein Verbinder für Balken aus Vollholz oder Leimholz bekannt, bei dem nicht vorgelochte Stahlplatten verwendet werden. Zum Fixieren der Stahlplatten werden spezielle Stabdübel verwendet, die an ihrer Spitze einen Bohrabschnitt aufweisen und sowohl den Balken als auch die Stahlplatte durchbohren können.

Aus der deutschen Patentschrift DE 862 659 B ist eine Stabverbindung für Holzfachwerke mittels Knotenplatten bekannt, bei der die Knotenplatten aus gepresstem Kunstholz bestehen. Beim Zusammenfügen eines Fachwerks werden zunächst anstelle der endgültigen Knotenplatten solche aus einem leichter bearbeitbaren Werkstoff, wie Sperrholz oder Hartpappe, eingefügt und nach dem Bohren als Schablonen für die endgültigen Knotenplatten verwendet. Die vorgebohrten Knotenplatten aus gepresstem Kunstholz werden dann in Schlitze der zu verbindenden Fachwerkstäbe eingefügt. Sowohl die Fachwerkstäbe als auch die Knotenplatten sind dann vorgebohrt und in die vorgebohrten Öffnungen werden Dübel eingesetzt. Dabei soll dafür Sorge getragen werden, dass der Lochdurchmesser in den Knotenplatten etwas größer ist als der Lochdurchmesser in den Fachwerkstäben.

Aus der deutschen Gebrauchsmusterschrift DE 296 21 923 U1 ist eine Spezialschraube zum Verbinden von Balken aus Vollholz oder Leimholz mit einem Knotenblech bekannt. Das Knotenblech wird in einen Schlitz in den Balken eingesetzt und die Spezialschraube weist eine Bohrspitze auf, die seitliche Bohrflügel aufweist, die mit Sollbruchstellen mit dem Schaft der Schraube versehen sind. Darüber hinaus weist die Spezialschraube in einem ersten, sich an die Bohrspitze anschließenden Abschnitt ein Gewinde mit einem ersten, kleineren Außendurchmesser auf. In einem zweiten, vom Kopf der Schraube ausgehenden Abschnitt weist die Schraube ein Gewinde mit einem zweiten, größeren Außendurchmesser auf. Die Länge der beiden Abschnitte mit kleinerem bzw. größerem Außendurchmesser ist exakt so abgestimmt, dass der Abschnitt mit dem Außengewinde mit größerem Außendurchmesser erst dann in den Holzbalken eingreift, wenn die Bohrspitze das Knotenblech vollständig durchbohrt hat. Nach dem Durchbohren des Knotenblechs und wenn die Bohrspitze das gebohrte Loch im Knotenblech durchdringt, scheren die beiden seitlichen Bohrflügel an dem Schraubenschaft ab. Nach dem Durchdringen des Knotenblechs bohrt die Bohrspitze infolgedessen ein Loch mit kleinerem Durchmesser, das dann auf das Außengewinde mit dem kleineren Außendurchmesser abgestimmt ist.

Aus der schweizerischen Patentschrift CH 680 674 A5 ist eine Wellblech-Holzverbindung bekannt, mit der Holzbalken stirnseitig oder T-förmig auf Zug und Abscherung zusammengehalten werden. In die Holzbalken werden schlitzförmige Sacklöcher eingebracht, in die ein Verbindungsblech eingefügt wird. Quer zum Verbindungsblech werden Nägel oder Schrauben ohne Vorbohren in die Balken und das Blech eingetrieben. Die Blechdicke wird so klein gehalten, dass Nägel oder Schrauben das lochfreie Blech durchdringen können.

Mit der Erfindung sollen ein verbessertes Verfahren zum Verbinden von Balken aus Holzwerkstoff angegeben werden.

Das der Erfindung zugrunde liegende Problem wird durch ein Verfahren zum Verbinden von Balken aus Vollholz oder Leimholz mit den Merkmalen des Anspruchs 1 gelöst. Es sind die Schritte vorgesehen: Herstellen von Schlitzen in den Balken, Einführen eines Verbinders aus Kunstharz-Pressholz in die Schlitze und Fixieren des Verbinders in den Schlitzen mittels Holzschrauben. Der besondere Vorteil des erfindungsgemäßen Verfahrens besteht darin, dass die Verbinder nicht vorgebohrt sein müssen. Vielmehr kann ein Zimmermann beim Errichten eines Holzbauwerks die Balken mit den in die Schlitze des Balkens eingesetzten Verbindern mit herkömmlichen Holzbohrern vorbohren und dann Holzschrauben einsetzen. Besonders vorteilhaft ist das erfindungsgemäße Verfahren, wenn die Verbinder mittels Holzschrauben in den Schlitzen der Balken fixiert werden. In einem solchen Fall können konventionelle Holzschrauben verwendet werden und insbesondere ist keinerlei Vorbohren des Balkens oder des Verbinders erforderlich.

Gemäß der Erfindung werden die Holzschrauben ohne Vorbohren der Balken und des Verbinders in die Balken und den Verbinder eingeschraubt.

Vorteilhafterweise werden Holzschraube mit Bohrspitze verwendet.

Auf diese Weise können sogar die aus sehr hartem und widerstandsfähigem Kunstharz-Pressholz bestehenden Verbinder ohne Vorbohren mittels der Holzschrauben durchdrungen werden.

Gemäß der Erfindung werden Holzschrauben mit Vollgewinde verwendet.

Mittels Holzschrauben mit Vollgewinde ist eine Fixierung der Verbinder in allen Bewegungsrichtungen möglich.

Es ist ein Verbindersatz für Balken aus Holzwerkstoff, insbesondere für sowohl auf Druck als auch auf Zug belastete Verbindungen, vorgesehen, wobei der Verbindersatz wenigstens einen Verbinder mit wenigstens einem plattenförmigen Abschnitt zum Einsetzen in vorgefertigte Schlitze in dem Balken oder den Balken aufweist, wobei wenigstens der plattenförmige Abschnitt des Verbinders aus Kunstharz-Pressholz besteht, wobei das Kunstharz-Pressholz aus mehreren übereinander angeordneten Hartholzschichten und Kunstharz besteht und wobei der Verbindersatz mehrere Holzschrauben aufweist, die zum Fixieren des wenigstens einen Verbinders in dem Balken vorgesehen sind.

Überraschenderweise ist es möglich, die bekannten Metallplatten, beispielsweise Stahl- oder Aluminiumplatten, bei Balkenverbindern durch Platten aus Kunstharz-Pressholz zu ersetzen. Solche Kunstharz-Pressholz-Platten können mit Holzwerkzeugen bearbeitet werden und können auch mittels Holzschrauben durchbohrt werden. Auf diese Weise ist es möglich, eine nicht vorgebohrte Verbinderplatte aus Kunstharz-Pressholz mittels Holzschrauben in einem Balken zu fixieren. Dadurch kann die umständliche Verbindung von Bohrschablonen oder Spezialbohrern für Stahl, wie sie bisher eingesetzt werden mussten, vollständig vermieden werden. Überraschenderweise hat sich dabei herausgestellt, dass Verbinder aus Kunstharz-Pressholz den Belastungen bei Verbindungen von Balken im Holzbau ohne weiteres standhalten können. Dies gilt insbesondere auch dann, wenn eine Balkenverbindung sowohl auf Druck als auch auf Zug belastet ist. Ein weiterer Vorteil der Erfindung ergibt sich in Bezug auf die Brandsicherheit. Die bekannten Nachteile von Verbindern aus Stahl treten bei Verbindern aus Kunstharz-Pressholz nicht auf. Im Rahmen der Erfindung können mehrere Verbinder in parallel zueinander angeordnete Schlitze eingesetzt werden.

Die mehreren Holzschrauben können jeweils eine Bohrspitze aufweisen.

Indem die Holzschrauben mit einer Bohrspitze versehen sind, kann auch der aus sehr hartem und schwer zu durchdringendem Kunstharz-Pressholz bestehende Verbinder problemlos durchdrungen werden.

Die Holzschrauben sind als Vollgewindeschrauben ausgebildet.

Der plattenförmige Abschnitt kann rechteckförmig oder T-förmig ausgebildet sein. Mittels der erfindungsgemäßen Verbinder aus Kunstharz-Pressholz lassen sich ohne weiteres die bei Verbindern aus Stahlplatten üblichen Formen herstellen. Bereits vorhandene Werkzeuge können dadurch für das Herstellen der Schlitze in den Balken problemlos weiter verwendet werden.

Das Kunstharz kann duromeres Kunstharz sein. Das Kunstharz-Pressholz besteht aus mehreren Hartholzschichten, die dann mit einem duromeren oder duroplastischen Kunstharz, das also nach der Aushärtung nicht mehr verformt werden kann, miteinander verbunden und gegebenenfalls auch von dem Kunstharz durchdrungen sind. Dadurch ergibt sich ein sehr stabiler und hochbelastbarer Verbund.

Eine Zugfestigkeit des verwendeten Kunstharz-Pressholzes liegt vorteilhafterweise parallel zu den Hartholzschichten größer als 75 N/mm². Eine Druckfestigkeit parallel zu den Hartholzschichten liegt vorteilhafterweise zwischen 110 und 150 N/mm² und eine Druckfestigkeit senkrecht zu den Hartholzschichten liegt vorteilhafterweise zwischen 250 und 310 N/mm².

Ein Elastizitätsmodul des Kunstharz-Pressholzes liegt senkrecht zu den Hartholzschichten auf Biegung belastet vorteilhafterweise zwischen 15500 und 18500 N/mm². Ein Elastizitätsmodul senkrecht zu den Hartholzschichten auf Druck belastet liegt vorteilhafterweise zwischen 2250 und 2850 N/mm². Ein Elastizitätsmodul parallel zu den Hartholzschichten auf Druck belastet liegt vorteilhafterweise zwischen 5500 und 6500 N/mm². Es hat sich herausgestellt, dass Kunstharz-Pressholz mit den vorstehend genannten Materialeigenschaften besonders gut geeignet ist für die erfindungsgemäßen Balkenverbinder. Insbesondere können Verbinderplatten aus Stahl problemlos durch die erfindungsgemäßen Verbinder aus Kunstharz-Pressholz ersetzt werden. Die Lochleibungsfestigkeit beträgt mindestens 150 N/mm².

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. In den Zeichnungen zeigen:
- Fig. 1: eine Ansicht einer Balkenverbindung mit einem Verbinder von schräg oben,
- Fig. 2: eine Vorderansicht der Balkenverbindung der Fig. 1,
- Fig. 3: eine Seitenansicht der Balkenverbindung der Fig. 1,
- Fig. 4: eine Draufsicht auf die Balkenverbindung der Fig. 1,
- Fig. 5: eine Ansicht des Verbinders von schräg oben,
- Fig. 6: mehrere Seitenansichten von Holzschrauben für den Verbindersatz und
- Fig. 7: mehrere Seitenansichten von weiteren Holzschrauben für den Verbindersatz.

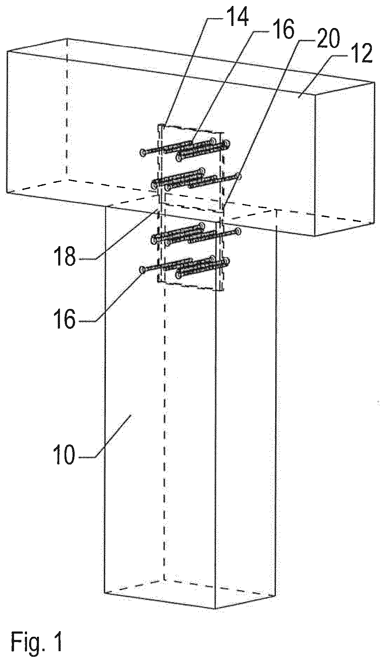

Die Darstellung der Fig. 1 zeigt eine Verbindung zwischen einem ersten Balken 10 und einem zweiten Balken 12, wobei der zweite Balken 12 auf die Stirnseite des ersten Balkens 10 aufgesetzt ist, so dass sich eine T-förmige Anordnung ergibt. Die Balken 10, 12 sind entweder als Vollholz-Balken oder als Leimholz-Balken ausgebildet.

Die Balken 10, 12 sind durchscheinend dargestellt, so dass ein zwischen den Balken 10, 12 angeordneter Verbinder 14 zu erkennen ist. Der Verbinder 14 wäre an und für sich nicht zu erkennen und ist daher gestrichelt dargestellt. Durchgezogen dargestellt sind weiter mehrere Schrauben 16, die den Verbinder 14 relativ zu den Balken 10, 12 fixieren. Diese Schrauben sind durchgezogen dargestellt, auch wenn diese an und für sich lediglich auf der dem Betrachter der Fig. 1 zugewandten Seite im Bereich ihrer jeweiligen Köpfe zu erkennen wären.

Der Verbinder 14 weist die Form einer rechteckigen Platte auf und ist in Schlitze 18, 20 eingesetzt, die in der Darstellung der Fig. 1 lediglich angedeutet sind. Ein Schlitz 18 ist ausgehend von der oberen Stirnseite des Balkens 10 in diesen eingebracht und ein zweiter Schlitz 20 ist in den Balken 12 eingebracht. Zusammen genommen ergeben die beiden Schlitze 18, 20 eine Aussparung in Form einer rechteckförmigen Platte, die nur geringfügig größer ist als der Verbinder 14.

Nachdem die Schlitze 18, 20 in die Balken 10, 12 eingebracht wurden, wird der Verbinder 14 beispielsweise in den Schlitz 18 des Balkens 10 eingesetzt. Der Balken 12 wird dann so auf den Balken 10 aufgesetzt, dass gleichzeitig der Verbinder 14 in den Schlitz 20 des Balkens 12 eingeführt wird.

Im Unterschied zu konventionellen Balkenverbindungen, bei denen Stahlplatten als Verbinder eingesetzt werden, besteht der Verbinder 14 aus Kunstharz-Pressholz. Der Verbinder besteht aus mehreren, übereinander angeordneten Hartholzschichten und Kunstharz. Die Hartholzschichten werden mittels des Kunstharzes miteinander verklebt und werden wenigstens abschnittsweise auch von dem Kunstharz durchdrungen. Der Verbinder 14 ist dadurch äußerst belastbar und kann vor allem die Druck- und Zug-Belastungen, die nach dem Einbau der Balken 10, 12 in eine Holzrahmenstruktur eines Gebäudes auftreten, zwischen den Balken 10, 12 übertragen. Überraschenderweise ist es dabei möglich, die in der Balkenstruktur eines Holzbauwerks zwischen den Balken 10, 12 auftretenden Kräfte mittels des Verbinders 14, der aus Kunstharz-Pressholz besteht, zu übertragen. Die Belastbarkeit der Balkenverbindung mit dem Verbinder 14 ist dabei annähernd gleich wie die Belastbarkeit von Balkenverbindungen mit herkömmlichen Verbindern aus Stahlplatten.

Nach dem Einsetzen in die Schlitze 18, 20 wird der Verbinder 14 dann mittels mehrerer Holzschrauben 16 relativ zu den Balken 10, 12 fixiert. Hierzu werden die Holzschrauben 16 senkrecht zu den größeren Oberflächen des Verbinders 14 durch den Balken 10 und den Verbinder 14 bzw. durch den Balken 12 und durch den Verbinder 14 geschraubt. Die Schrauben 16 werden dabei sowohl von der in Fig. 1 dem Betrachter zugewandten Vorderseite als auch der dem Betrachter abgewandten Rückseite der Balken 10, 12 durch die Balken 10, 12 und den Verbinder hindurchgeschraubt. Der besondere Vorteil des Verbinders 14 liegt dabei auch darin, dass herkömmliche Holzschrauben 16 verwendet werden können. Denn die Holzschrauben 16 können ohne weiteres in die aus Vollholz oder Leimholz bestehenden Balken 10, 12 eingeschraubt werden und die Schrauben sind auch so ausgebildet, dass sie den aus Kunstharz-Pressholz bestehenden Verbinder 14 ohne Vorbohren durchdringen. Die Balken 10, 12 müssen infolgedessen nach dem Einsetzen des Verbinders 14 nicht vorgebohrt werden.

Nach dem Einschrauben der Schrauben 16 ist der Verbinder 14 relativ zu den Balken 10, 12 fixiert und die Verbindung zwischen den beiden Balken 10, 12 ist voll belastbar.

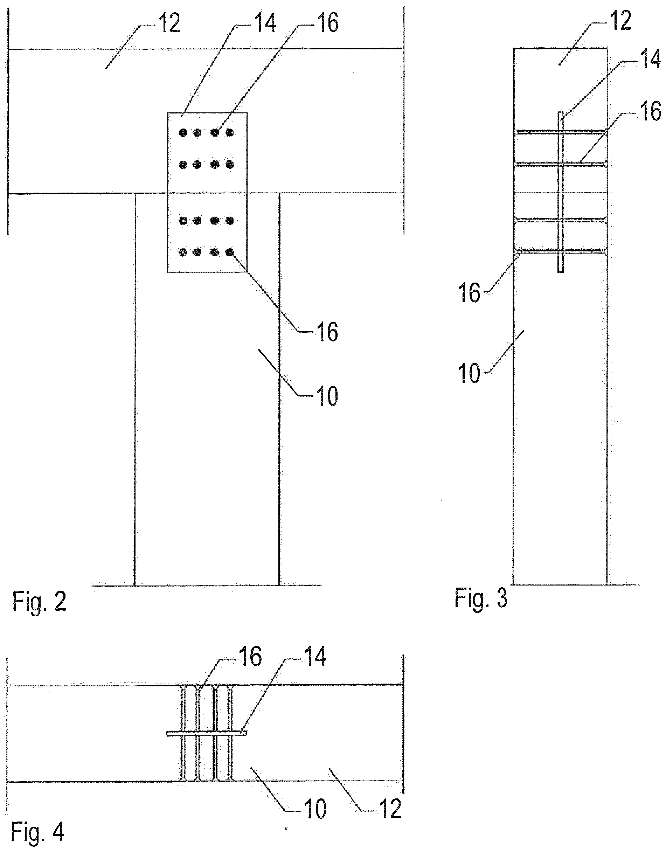

Die Darstellung der Fig. 2 zeigt eine Vorderansicht der Verbindung der Fig. 1. Wieder sind die Balken 10, 12 durchscheinend dargestellt, so dass der innerhalb der Balken 10, 12 liegende Verbinder 14 zu erkennen ist.

Relativ zum Balken 12 ist der Verbinder 14 mit insgesamt acht Holzschrauben 16 fixiert und auch relativ zum Balken 10 ist der Verbinder 14 mit insgesamt acht Holzschrauben 16 fixiert. Die Holzschrauben 16 werden dabei in zueinander parallelen Reihen zu jeweils vier Schrauben angeordnet. Vorteilhafterweise wird in jeder Reihe jede zweite Schraube von der gegenüberliegenden Seite eingesetzt. In Fig. 2 würde also in der obersten Reihe der Schrauben 16 die ganz linke Schraube von der dem Betrachter zugewandten Vorderseite eingesetzt. Die dann rechts davon folgende Schraube würde aber von der dem Betrachter abgewandten Rückseite eingesetzt. Ein solches abwechselndes Einsetzen der Schrauben kann dann über die insgesamt vier Reihen der Schrauben 16 vorgenommen werden, wobei zusätzlich in der Darstellung der Fig. 2 auch in Richtung von oben nach unten die Einsetzrichtung der Schrauben gewechselt werden kann.

Die Darstellung der Fig. 3 zeigt die Verbindung der Fig. 1 von der Seite, wobei die Balken 10, 12 wieder durchscheinend dargestellt sind, so dass der Verbinder 14 und die Schrauben 16 erkennbar sind.

Die Darstellung der Fig. 4 zeigt die Verbindung der Fig. 1 von oben. Wieder sind die Balken 10, 12 durchscheinend dargestellt, so dass der Verbinder 14 und die Schrauben 16 zu erkennen sind. Da insgesamt vier Schrauben übereinander angeordnet sind bzw. in der Blickrichtung der Fig. 4 hintereinander, sind die Schrauben übereinander gezeichnet. Jede Schraube 16 weist aber eine Spitze an einem Ende und einen gegenüber der Spitze erweiterten Kopf am gegenüberliegenden Ende auf.

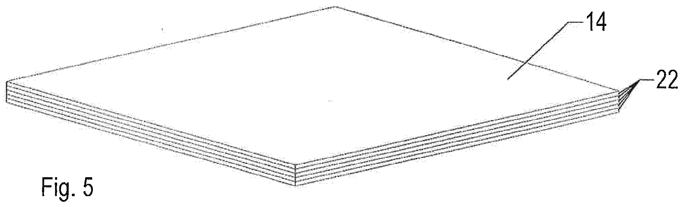

Fig. 5 zeigt den Verbinder 14 von schräg oben. Zu erkennen sind mehrere Hartholzschichten 22, die mittels nicht dargestelltem Kunstharz verbunden und wenigstens abschnittsweise von dem Kunstharz durchdrungen sind. Nach dem Pressen und Aushärten des Kunstharzes ist der Verbinder 14 extrem belastbar und kann anstelle eines herkömmlichen Stahlplattenverbinders eingesetzt werden.

Üblicherweise wird der Verbinder 14 aus bereits fertiggestellten Plattenmaterial ausgeschnitten. Dies kann mit herkömmlichen Holzbearbeitungswerkzeugen erfolgen.

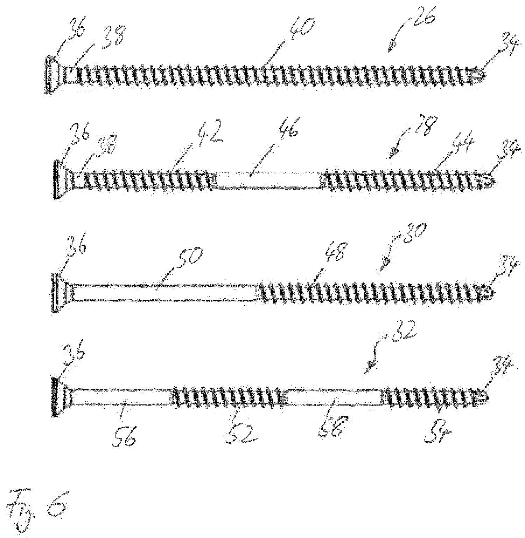

Figur 6 zeigt mehrere Holzschrauben 26, 28, 30 und 32, wovon Holzschraube 26 bei dem erfindungsgemäßen Verfahren eingesetzt werden kann. Alle Holzschrauben 26, 28, 30 und 32 weisen eine Bohrspitze 34 auf, die entweder als Bohrspitze mit einer klassischen Bohrergeometrie oder auch als gewalzte Spitze mit Schaberippen ausgebildet sein kann. Jede der Holzschrauben 26, 28, 30 und 32 ist darüber hinaus mit einem Schraubenkopf 36 versehen, wobei alle Schraubenköpfe 36 als Senkköpfe ausgebildet sind. Die Schraube 26 ist als so genannte Vollgewindeschraube ausgebildet und weist mit Ausnahme der Bohrspitze 34 und eines sehr kurzen zylindrischen Abschnitts 38 unmittelbar unterhalb des Schraubenkopfes 36 ein durchgehendes Holzgewinde 40 auf.

Die Holzschraube 28 weist neben der Bohrspitze 34 und dem zylindrischen Abschnitt 38 unmittelbar unterhalb des Schraubenkopfes 36 zwei Gewindeabschnitte 42 und 44 und einen zwischen den beiden Gewindeabschnitte 42, 44 liegenden zylindrischen, gewindefreien Abschnitt mit glatter Außenfläche 46 auf. Der Gewindeabschnitt 42 liegt dabei zwischen dem Abschnitt 38 und dem gewindefreien Abschnitt 46 und der Gewindeabschnitt 44 liegt zwischen dem gewindefreien Abschnitt 46 und der Bohrspitze 34.

Beispielsweise kann die Holzschraube 28 zur Befestigung eines mittig in einem Balken angeordneten Verbinders verwendet werden. Im vollständig montierten Zustand der Holzschraube 28 wird der Verbinder dann von dem gewindefreien Abschnitt 46 durchsetzt. Dadurch ist eine Befestigung des Verbinders möglich, die weitgehend der Befestigung mit einem Stabdübel entspricht.

Die Holzschraube 30 ist mit einem von der Bohrspitze ausgehenden Gewindeabschnitt 48 und einem gewindefreien Abschnitt 50 versehen, der sich von dem kopfseitigen Ende des Gewindeabschnitts 48 bis zum Schraubenkopf 36 erstreckt.

Die Holzschraube 32 ist mit zwei Gewindeabschnitten 52, 54 und zwei gewindefreien Abschnitte 56, 58 versehen. Ausgehend vom Schraubenkopf 36 folgt zunächst ein gewindefreier Abschnitt 56. An den gewindefreien Abschnitt 56 schließt sich der erste Gewindeabschnitt 52 an. Auf den Gewindeabschnitt 52 folgt wieder ein gewindefreier Abschnitt 58. Auf den gewindefreien Abschnitt 58 folgt dann ein zweiter Gewindeabschnitt 54, der sich bis zur Bohrspitze 34 erstreckt. Die Gewindeabschnitte 52, 54 sind etwa gleich lang und auch die gewindefreien Abschnitte 56, 58 sind etwa gleich lang.

Bei allen Holzschrauben 26, 28, 30, 32 ist dasselbe Gewinde in den Gewindeabschnitten vorgesehen. Auch die Holzschrauben 26, 32 mit mehreren Gewindeabschnitten 42, 44, 52, 54 weisen also immer dasselbe Holzgewinde mit der gleichen Steigung auf.

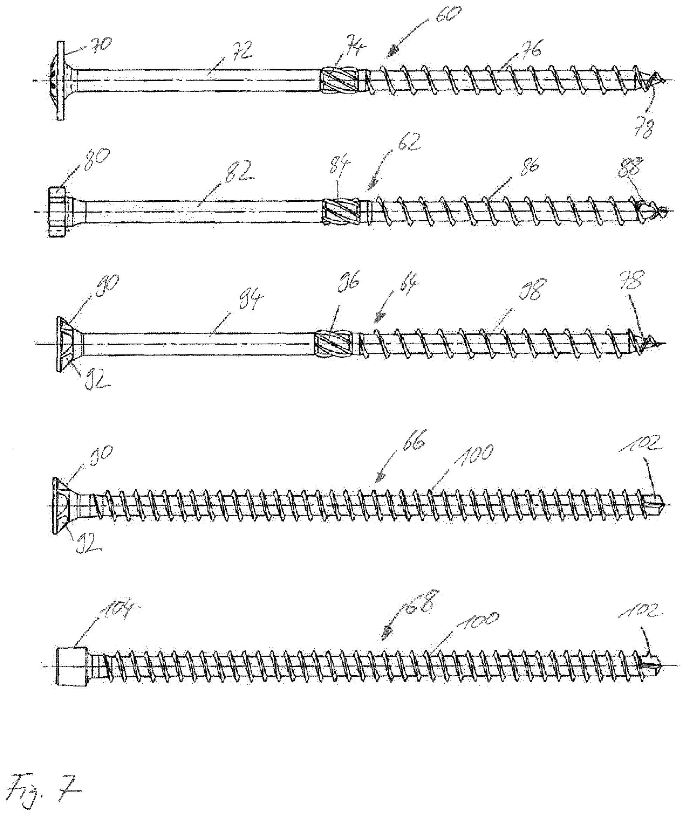

Die Darstellung der Figur 7 zeigt fünf weitere Holzschrauben 60, 62, 64, 66, 68, wovon Holzschrauben 66 und 68 bei den erfindungsgemäßen Verfahren verwendet werden können.

Die Holzschraube 60 weist einen scheibenförmigen Kopf 70 auf, an den sich ein gewindefreier Abschnitt 72 anschließt. Auf den gewindefreien Abschnitt 72 folgt ein Fräsabschnitt 74 mit Steilgewinde. Vom Fräsabschnitt 74 bis zur Spitze der Schraube ist dann ein Gewindeabschnitt 76 angeordnet. Im Bereich der sich konisch verjüngenden Spitze der Schraube 60 sind dem Holzgewinde gegenläufige Schaberippen 78 angeordnet.

Die Holzschraube 72 weist einen Sechskantkopf 80 auf, auf den ein gewindefreier Abschnitt 82 folgt. Zwischen dem gewindefreien Abschnitt 82 und einem Gewindeabschnitt 86 ist ein Fräsabschnitt 84 mit einen Steilgewinde angeordnet. Der Gewindeabschnitt 86 erstreckt sich bis zur konisch verjüngenden Spitze der Schraube, wobei an der sich konisch verjüngenden Spitze zusätzlich zu dem normalen Holzgewinde noch ein gegenläufiges Gewinde 88 angeordnet ist.

Die Holzschraube 64 weist einen Senkkopf 90 auf, der mit mehreren Frästaschen 92 versehen ist. Auf den Senkkopf 90 folgt ein gewindefreier Abschnitt 94, an den sich dann wieder ein Fräsabschnitt 96 mit Steilgewinde anschließt. Auf den Fräsabschnitt 96 folgt ein Gewindeabschnitt 98, der sich bis zur konisch verjüngenden Spitze der Schraube erstreckt. An der Spitze der Schrauben sind zum eigentlichen Gewinde gegenläufige Schaberippen 78 angeordnet.

Die Schraube 66 ist als Vollgewindeschraube ausgebildet und ein Gewindeabschnitt 100 erstreckt sich zwischen dem Schraubenkopf 90, der mit den Frästaschen 92 ausgebildet ist. An dem, dem Schraubenkopf 90 gegenüberliegenden Ende der Holzschraube 66, ist eine Bohrspitze 102 angeordnet. Die Bohrspitze 102 weist eine konventionelle Bohrergeometrie mit zwei Hauptschneiden und zwei Nebenschneiden auf. Die Bohrspitze 102 wird beispielsweise durch Kneifen herstellt. Die Holzschraube 68 unterscheidet sich von der Holzschraube 66 lediglich durch die Ausbildung ihres Schraubenkopfes 104. Der Gewindeabschnitt 100 und die Bohrspitze 102 sind identisch ausgebildet wie bei der Holzschraube 66. Der Schraubenkopf 104 ist etwa zylindrisch mit glattem Außenumfang ausgebildet.

Einzelmerkmale der in den Figuren 6 und 7 dargestellten Holzschrauben lassen sich in beliebiger Weise miteinander kombinieren. Alle in den Figuren 6 bis 7 dargestellten Holzschrauben sind dafür geeignet, ohne Vorbohren in Balken eingeschraubt zu werden und auch die Verbinder zu durchdringen.

## Patentansprüche

1. Verfahren zum Verbinden von Balken aus Vollholz oder Leimholz mit den Schritten: Herstellen von Schlitzen (18, 20) in den Balken (10, 12), Einführen eines Verbinders (14) aus Kunstharz-Pressholz in die Schlitze (18, 20) und Fixieren des Verbinders (14) in den Schlitzen (18, 20), wobei das Fixieren des Verbinders (14) in den Schlitzen (18, 20) mittels Holzschrauben (16) erfolgt, wobei beim Fixieren des Verbinders (14) die Holzschrauben (16) ohne Vorbohren der Balken (10, 12) und des Verbinders (14) in die Balken (10, 12) und den Verbinder (14) eingeschraubt werden und wobei Holzschrauben (16) mit Vollgewinde verwendet werden.

2. Verfahren nach Anspruch 1, wobei Holzschrauben (16) mit Bohrspitze verwendet werden.

## Claims

1. Method for connecting beams from solid wood or glued laminated wood, comprising the steps of: producing slots (18, 20) in the beams (10, 12); introducing a connector (14) from synthetic resin densified wood into the slots (18, 20); and fixing the connector (14) in the slots (18, 20), wherein the fixing of the connector (14) in the slots (18, 20) is performed by means of wood screws (16), wherein the wood screws (16) when fixing the connector (14) are screwed into the beams (10, 12) and the connector (14) without pre-drilling the beams (10, 12) and the connector (14), and wherein wood screws (16) having a full thread are used.

2. Method according to Claim 1, wherein wood screws (16) having drill tips are used.

## Revendications

1. Procédé pour assembler des poutres en bois massif ou en bois lamellé-collé, comprenant les étapes suivantes : réalisation de fentes (18, 20) dans les poutres (10, 12), introduction d'un élément de liaison (14) en bois pressé et résine synthétique dans les fentes (18, 20) et fixation de l'élément de liaison (14) dans les fentes (18, 20), la fixation de l'élément de liaison (14) dans les fentes (18, 20) s'effectuant au moyen de vis à bois (16), la fixation de l'élément de liaison (14) s'effectuant par vissage des vis à bois (16) dans les poutres (10, 12) et dans l'élément de liaison (14) sans pré-perçage des poutres (10, 12) et de l'élément de liaison (14), et des vis à bois (16) à filetage complet étant utilisées.

2. Procédé selon la revendication 1, dans lequel sont utilisées des vis à bois (16) avec pointes de perçage.
